(19) Europäisches Patentamt
European Patent Office
Office européen des brevets

(11) **EP 3 901 661 B1**

(12) **EUROPEAN PATENT SPECIFICATION**

(45) Date of publication and mention
of the grant of the patent:
**22.05.2024 Bulletin 2024/21**

(21) Application number: **20170958.1**

(22) Date of filing: **22.04.2020**

(51) International Patent Classification (IPC):
*G01S 13/72* (2006.01)    *G01S 13/86* (2006.01)
*G01S 13/931* (2020.01)   *G01S 17/86* (2020.01)
*G01S 17/931* (2020.01)   *G01S 7/40* (2006.01)
*G01S 15/931* (2020.01)   *G05D 1/02* (2020.01)
*B60W 60/00* (2020.01)    *G06V 20/58* (2022.01)

(52) Cooperative Patent Classification (CPC):
**G01S 13/726; B60W 60/001; G01S 7/4026;**
**G01S 13/86; G01S 13/862; G01S 13/865;**
**G01S 13/867; G01S 13/931; G01S 15/931;**
**G01S 17/86; G01S 17/931; G06V 20/58;**
B60W 2556/25; G01S 7/4039; G01S 2013/9323;

(Cont.)

(54) **METHOD AND CONTROL UNIT FOR OPERATING AN AUTONOMOUS VEHICLE**

VERFAHREN UND STEUEREINHEIT ZUM BETRIEB EINES AUTONOMEN FAHRZEUGS

PROCÉDÉ ET UNITÉ DE COMMANDE POUR FAIRE FONCTIONNER UN VÉHICULE AUTONOME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**27.10.2021 Bulletin 2021/43**

(73) Proprietor: **Bayerische Motoren Werke**
**Aktiengesellschaft**
**80809 München (DE)**

(72) Inventors:
• **Parolini, Luca**
**84034 Landshut (DE)**
• **Coulin, Jade**
**83400 Hyeres (FR)**
• **Brown, Sean**
**81377 Munich (DE)**

(56) References cited:
DE-A1-102017 216 567    US-A1- 2016 266 581
US-A1- 2018 246 520     US-B2- 10 290 116

• **MICHAEL AEBERHARD ET AL: "Object existence**
**probability fusion using dempster-shafer theory**
**in a high-level sensor data fusion architecture",**
**INTELLIGENT VEHICLES SYMPOSIUM (IV), 2011**
**IEEE, IEEE, 5 June 2011 (2011-06-05), pages**
**770-775, XP031998940, DOI:**
**10.1109/IVS.2011.5940430 ISBN:**
**978-1-4577-0890-9**

**EP 3 901 661 B1**

(52) Cooperative Patent Classification (CPC): (Cont.)
    G01S 2013/9324; G01S 2013/93271;
    G01S 2013/93272; G01S 2013/93274

**Description**

The present document is directed at vehicles, notably at semi or fully autonomous vehicles. In particular, the present document is directed at controlling the operation of an autonomous vehicle.

In an autonomous vehicle (AV) a variety of sensors are used, which are configured to capture sensor data with regards to the environment of the vehicle. Sensor data may include low-level data, e.g., a point cloud of a lidar, and/or high-level data, e.g., pre-processed data in the sensor, which may include classification of an object as a car, a pedestrian or a truck. Depending on the specific requirements, low-level data, high-level data, or a mixture thereof may be used to provide a unified and consistent view of the environment around the vehicle. This unified and consistent view may be referred to as an environment model of the vehicle.

In order to enable a vehicle for making reliable decisions regarding upcoming maneuvers, information with regards to the certainty, with which individual objects within the environment of the vehicle have been detected, may be used. For example, a fake object in front of the vehicle may be detected based on the sensor data of a radar. The fake object could lead to an emergency brake. By providing information regarding the probability of existence for each detected object, the environment model allows a control unit of the vehicle, e.g. a maneuver planner of the vehicle, to decide whether it is necessary to execute an emergency brake or not.

DE 10 2017 216 567 A1 discloses a method for determining an environment map describing an environment of a vehicle that is at least partially detected by means of radar sensors. Occupied and free areas are marked in the environment map in a distinguishable way. By evaluating a detection quality criterion that evaluates radar data of the radar sensors and/or detection properties associated with the radar sensors, areas of the environment are marked as free in case of a high detection quality and are marked as not detectable in case of a low detection quality.

The scientific article "Object Existence Probability Fusion using Dempster-Shafer Theory in a High-Level Sensor Data Fusion Architecture" by Michael Aeberhard et al. (INTELLIGENT VEHICLES SYMPOSIUM (IV), 2011 IEEE, IEEE, 5 June 2011, pages 770-775, XP031998940, XP031998940, DOI:10.1109/IVS.2011.5940430 ISBN: 978-1-4577-0890-9) presents a method for the fusion of an existence probability of an object based on Dempster-Shafer evidence theory in the framework of a high-level sensor data fusion architecture. The method is able to take into consideration sensor reliability in the fusion process.

US 2018/246520 A1 describes a method comprising: initializing an observability grid with an observation likelihood distribution for an environment being navigated by a robot; searching the environment using the observability grid for an observation point; navigating, using a propulsion system, the robot to the observation point; and observing a target object from the observation point. The method may further include sampling the environment with the robot based on the observation likelihood distribution of the observability grid.

US 2016/266581 A1 teaches that for each of a plurality of sensors of a vehicle, a computer may generate an individual 3D model of that sensor's field of view. Weather information is received and used to adjust one or more of the models. After this adjusting, the models are aggregated into a comprehensive 3D model. The comprehensive model is combined with detailed map information indicating the probability of detecting objects at different locations. The model of the vehicle's environment is computed based on the combined comprehensive 3D model and detailed map information.

US 10 290 116 B2 describes a method for analyzing a dynamic scene observed with the aid of a block of sensor(s) comprising a step of defining a grid partitioned into cells and corresponding to the observed scene; and the iterative implementation by computer of the steps: collecting at least one new observation of the block of sensor(s) at the $k^{th}$ iteration and determining, as a function of the new collected observation, a first probability of occupancy of each cell of the grid modeling the operation of the block of sensor(s); determining, for each cell, at the $k^{th}$ iteration, a second probability of occupancy of the cell and a set of probability (probabilities) of motion of the content of the cell as a function of the first probability of occupancy of the cell determined at the $k^{th}$ iteration.

The present document is directed at the technical problem of further increasing the reliability and/or safety of an autonomous vehicle. The technical problem is solved by the independent claims. Preferred embodiments are specified in the dependent claims.

According to an aspect, a control unit for operating a (motor) vehicle which comprises a plurality of sensors for capturing sensor data regarding an environment of the vehicle is described. The plurality of sensors may comprise one or more cameras, one or more radar sensors, one or more lidar sensors and/or one or more ultrasonic sensors. Each sensor may be configured to indicate for a particular location within the environment of the vehicle whether: an object has been detected based on the sensor data of the sensor; no object has been detected based on the sensor data of the sensor; and/or it is unknown if an object is located at the particular location.

The control unit is configured to determine an observability value for a particular location within the environment of the vehicle. The observability value is indicative of how well the particular location can be sensed by the plurality of sensors of the vehicle. In other words, the observability value may indicate how well objects at the particular location may be observed and/or detected based on the sensor data of the plurality of sensors of the vehicle. A high observability value may indicate a high observability, and a low observability may indicate a low observability. The observability value may vary between 0 (no observability) and 1 (full observability).

The observability value of the particular location may be independent on whether or not an object has been detected at the particular location. In particular, the observability value may be independent of the certainty regarding the existence of a particular object. The observability value may rather indicate the generic observability of objects at the particular location.

The environment of the vehicle may be subdivided into a grid with a plurality of grid cells (i.e. with a plurality of different locations). The control unit may be configured to determine an observability grid which comprises a plurality of observability values for the corresponding plurality of different locations or cells within the environment of the vehicle.

The control unit is further configured to operate the vehicle, notably to control the autonomous longitudinal and/or lateral guidance of the vehicle, in dependence of the observability value for the particular location and/or in dependence of the observability grid. In particular, the control unit may be configured to adapt the degree of autonomy, the vehicle speed and/or the trajectory of the vehicle in dependence of the observability value for the particular location and/or in dependence of the observability grid.

By taking into account the observability of locations within the environment of the vehicle, the safety, the comfort and/or the reliability of autonomous driving may be increased.

The control unit may be configured to determine a subset of sensors from the plurality of sensors, which are capable of capturing sensor data regarding the particular location. In other words, it may be determined which zero, one or more sensors of the vehicle are capable of capturing sensor data regarding the particular location. For this purpose, the field of view of the different sensors may be taken into account. Furthermore, it may be determined, whether the field of view of the different sensors is affected due to weather conditions, due to soiling of the respective sensor and/or due to obstruction by an object within the environment of the vehicle.

The observability value for the particular location may then be determined in a precise manner based on the subset of sensors, notably based on the number of sensors comprised within the subset of sensors. Typically, the observability value increases as the number of sensors within the subset of sensors increases (or vice versa).

The control unit may be configured to determine one or more probability values for each sensor from the subset of sensors. The one or more probability values for a sensor may be indicative of: the probability that the sensor does not detect an object at the particular location, even though there is an object at the particular location; the probability that the sensor detects an object at the particular location, when there is an object at the particular location; and/or the probability that the sensor detects an object at the particular location, even though there is no object at the particular location. The one or more probability values may be determined and/or provided online by the different sensors (at different time instants k).

The observability value for the particular location may then be determined in a precise manner based on the one or more probability values for each sensor from the subset of sensors, notably by combining the one or more probability values for each sensor from the subset of sensors.

The control unit is configured to determine a sequence of observability values for the particular location for a sequence of subsequent time instants k. In other words, the observability of a particular location is determined at multiple time instances. Furthermore, the control unit is configured to operate the vehicle, notably the autonomous longitudinal and/or lateral guidance of the vehicle, based on the sequence of observability values for the particular location for the corresponding sequence of subsequent time instants k. By verifying the observability of a particular location at multiple time instants, the safety, comfort and/or reliably of the operation of the vehicle may be further increased.

The control unit is configured to determine a cumulated observability for the particular location over a time period of $K$ subsequent time instants $k,$ with $K > 1$, based on the observability values for the particular location for K subsequent time instants k, notably by combining the observability values for the particular location for $K$ subsequent time instants $k$. The cumulated observability $O^j (P)$ for the particular location $P$ may be determined based on

$$O^j (P) = 1 - \prod_{k=1}^{K} \left(1 - O^j (k; P)\right)$$

wherein $O^j (k; P)$ is the observability value for the particular location $P$ for the time instant $k.$

The control unit is configured to operate the vehicle in dependence of the cumulated observability, notably such that the cumulated observability is equal to or greater than a pre-determined observability threshold. By way of example, the vehicle speed may be set such that the cumulated observability is equal to or greater than the pre-determined observability threshold. By taking into account a cumulated observability for the particular location over a time period of $K$ subsequent time instants $k,$ the safety, comfort and/or reliably of the operation of the vehicle may be increased further.

The control unit may be configured to determine a plurality of observability values for the particular location for a corresponding plurality of different object types of objects to be sensed at the particular location. Example object types are: pedestrians, cars, trucks, small objects, large objects, etc. Furthermore, the control unit may be configured to operate the vehicle in dependence of the plurality of observability values for the plurality of different object types. By considering different observability values for different types of objects, the safety, comfort and/or reliably of the operation of the vehicle may be increased further.

According to a further aspect, a motor vehicle (notably a car, a bus, a truck and/or a motorcycle) is described, which comprises the control unit described in the present document.

According to a further aspect, a method for operating a (motor) vehicle which comprises a plurality of sensors for capturing sensor data regarding an environment of the vehicle is described. The method comprises determining an observability value for a particular location within the environment of the vehicle. The observability value may be indicative of how well the particular location can be sensed by the plurality of sensors of the vehicle. Furthermore, the method comprises: determining a sequence of such observability values for the particular location for a sequence of subsequent time instants k; operating the vehicle, notably autonomous longitudinal and/or lateral guidance of the vehicle, based on the sequence of observability values for the particular location for the sequence of subsequent time instants k; determining a cumulated observability for the particular location over a time period of K subsequent time instants k, with K>1, based on the observability values for the particular location for K subsequent time instants k, notably by combining the observability values for the particular location for K subsequent time instants k; and operating the vehicle in dependence of the cumulated observability, such that the cumulated observability is equal to or greater than a pre-determined observability threshold.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 shows example components of a vehicle;
Fig. 2a shows example fields of views (FoV) of environment sensors of a vehicle;
Fig. 2b shows example FoVs taking into account obstruction by an object within the environment of the vehicle;
Fig. 2c shows an example grid of the environment of a vehicle indicating the sensor count for the different cells of the grid;
Fig. 3 shows an example observability grid of the environment of a vehicle; and
Fig. 4 shows a flow chart of an example method for operating a vehicle.

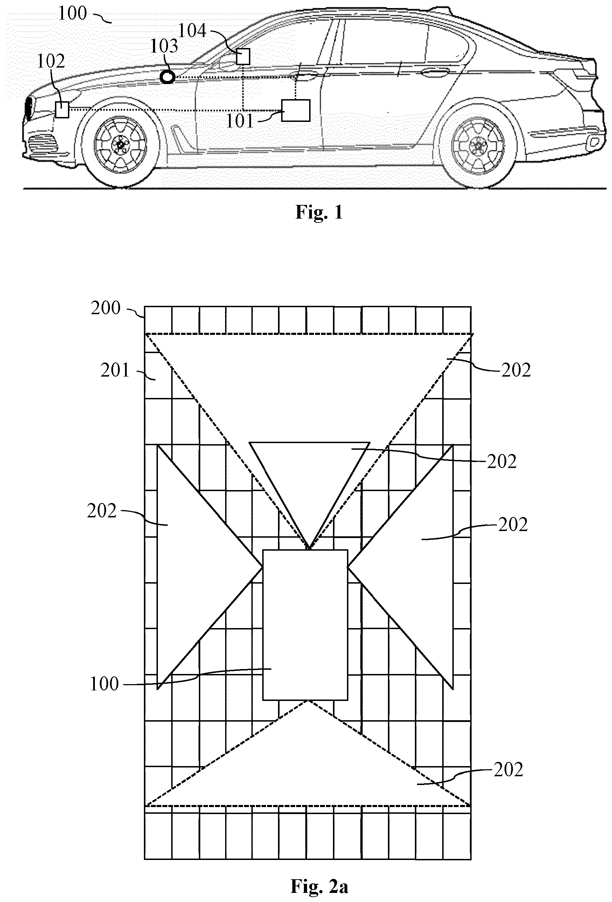

As indicated above, the present document is directed at increasing the reliability of an autonomous driving function of a vehicle, wherein the autonomous driving function is configured to perform longitudinal and/or lateral guidance of the vehicle in a semi or fully autonomous manner. In this context, Fig. 1 shows example components of a vehicle 100. The vehicle 100 comprises one or more environment sensors 102 which are configured to capture sensor data regarding the environment of the vehicle 100. Example environment sensors 102 are: a radar sensor, a lidar sensor, a camera, an ultrasonic sensor, etc.

A control unit 101 of the vehicle 100 may be configured to generate an environment model of the environment of the vehicle 100 based on the sensor data of the one or more sensor 102. The environment model may indicate the position, the size and/or the type of one or more objects within the environment of the vehicle 100. The environment model may indicate the one or more objects within a grid comprising a plurality of grid cells. The grid cells may have a size of 10cm x 10cm or smaller.

Furthermore, the control unit 101 may be configured to operate one or more actors 103 of the vehicle 100 in dependence of the environment model. The one or more actors 103 may comprise: an engine or a motor of the vehicle 100, a braking system of the vehicle 100 and/or a steering system of the vehicle 100. By operating the one or more actors 103, longitudinal and/or lateral guidance of the vehicle 100 may be performed at least partially in an autonomous manner.

In addition, the vehicle 100 may comprise a user interface 104 which is configured to enable a user interaction between the vehicle 100 and a user, notably a driver, of the vehicle 100.

As indicated above, the environment model may indicate for a detected object certainty information regarding the certainty that the detected object actually exists. The certainty information for an object may be taken into account by the control unit 101 for performing autonomous longitudinal and/or lateral guidance of the vehicle 100.

When operating a vehicle 100 at a relatively high level of automation, e.g., at an SAE-Level 3 and above, the vehicle 100 is responsible for selecting and implementing a driving maneuver. Notably in this case, a further piece of information may be taken into account by the control unit 101, notably the probability that one or more relevant objects have not been missed by the sensors 102 of the vehicle 100.

For example, in an urban environment, a vehicle 100 may need to react to a pedestrian crosswalk. When approaching the pedestrian crosswalk, the vehicle 100, notably the control unit 101 of the vehicle 100, needs to decide whether it is necessary to slow down, because a pedestrian is approaching the crosswalk, or whether there are no pedestrians. For the case that no pedestrians have been detected, the environment model should provide information regarding the certainty or probability that a pedestrian, which actually exists, has not been observed. This measure may be referred to as the observability of objects. The observability may be determined and used for the plurality of grid cells of the grid of the environment model.

Observability does not measure the probability that an object, which has been observed, does actually not exists, but rather the probability that something is around the vehicle even though nothing has been detected. Observability may be particularly valuable in a situation where the nominal performance of the one or more environment sensors 102 of the vehicle 100 is reduced, e.g., due to weather conditions or to an internal error. When determining the observability, the limited field of view of the one or more sensors 102, which may be caused due to the presence of one or more other traffic participants within the environment of the vehicle 100, may be taken into account.

An observability measure may be taken into account in cases where the performance of one or more environment sensors 102 is reduced, e.g., due to weather condition or internal degradation problems. Weather conditions may reduce the capability of a sensor 102 to detect objects. For example, at night a camera 102 may be capable of detecting a pedestrian only within a reduced range compared to a day-light situation. Furthermore fog, rain, or sun light may reduce the capability of a camera 102 within the entire field of view (FoV) or within one or more subareas of the FoV of the camera 102. A lidar sensor 102 may be affected by salt or dust in front of the sensor 102. At runtime of the vehicle 100, the reduced FoV of a sensor 102 should be taken into account in the context of trajectory planning of the vehicle 100, notably in order to avoid assuming free space within a subarea that lies outside of the reduced FoV (but within the normal FoV) of the sensor 102.

An observability measure may be taken into account in the context of cleaning management of a sensor 102. A lidar sensor or a camera may get dirty during operation of a vehicle 100. This may lead to a sensor 102 being partially or completely blind. In particular one or more subareas of the sensors' FoV may be affected, such that objects may not be detected anymore (e.g. objects which are smaller than a certain size). In such a situation, the control unit 101 may decide to clean the sensor 102, in order to restore normal operation of the sensor 102. The cleaning process for cleaning a sensor 102 typically disables the sensor function completely and depending on the cleaning system, the cleaning process of a sensor 102 may affect multiple sensors at once. For example, if a camera is placed close to a lidar, cleaning the lidar may temporarily lead to a blind camera.

Hence, the control unit 101 may be configured to select an appropriate moment for a cleaning process, depending of the criticality of the one or more sensors 102 which are affected by the cleaning process. In particular, an observability measure may be determined for the case without the cleaning process and for the case with the cleaning process. The time instant for the cleaning process may be determined based on these observability measures. In particular, a time instant may be determined, for which the difference between the two observability measures is below a predetermined threshold value.

An observability measure may be taken into account in a situation where the field of view (FoV) of a sensor 102 is reduced due to the presence of other traffic participants, e.g., a truck, car, etc. The observability measure may inform the control unit 101 that a particular sensor 102 or the vehicle 100 has a limited FoV due to obstruction by another traffic participant and that, even though no objects have been detected within the obstructed area, an object may be located within the obstructed area.

The information about observability may be provided via a grid-like data structure, referred to herein as an observability grid. Fig. 2a shows a grid 200 indicative of example FoVs 202 of sensors 102 of a vehicle 100. The grid 200 comprises a plurality of grid cells 201. In particular, the grid 200 subdivides the environment of the vehicle 100 into a plurality of grid cells 201. The FoV 202 of a sensor 102 may be defined by a subset of cells 201 which are covered by the FoV 202 of the sensor 102. In other words, The FoV 202 of a sensor 102 may divide the total set of cells 201 of the grid 200 into a subset of cells 201, which are part of the FoV 202 of the sensor 102, and a complimentary subset of cells 201, which are not part of the FoV 202 of the sensor 102.

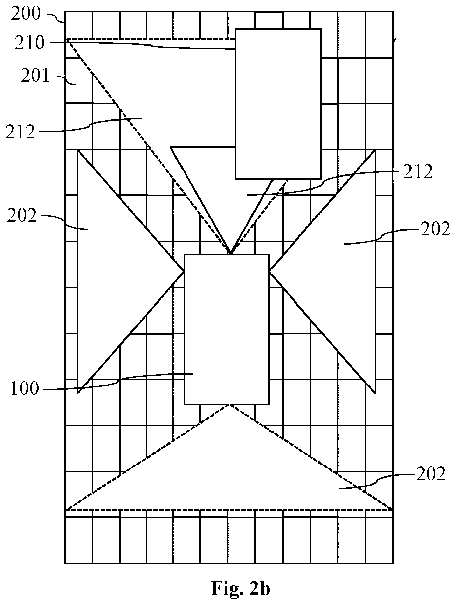

The FoV 202 of a sensor 102 may be obstructed by an object 210 within the environment of the vehicle 100, as shown in Fig. 2b. As a result of the obstruction of the FoV 202 of the sensor 102, the effective FoV 212 of the sensor 102 is reduced, thereby reducing the subset of cells 201 which are part of the (effective) FoV 212 of the sensor 102.

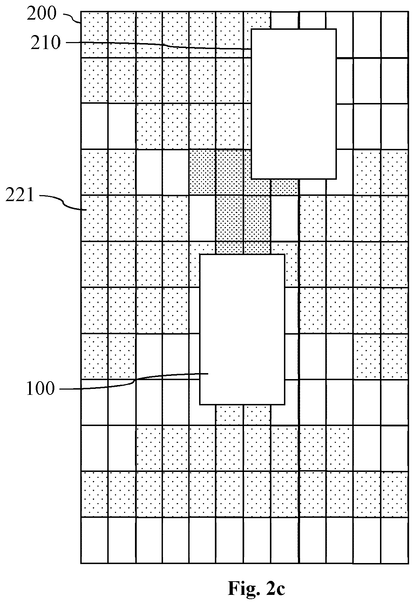

The effective FoVs 212 of the sensors 102 of the vehicle 100 may be used to determine observability values for the different cells 201 according to a given observability measure. In particular, an observability value may be determined for each grid cell 201 of the grid 200. Fig. 2c shows a grid 200 which indicates for each cell 201 the number 221 of sensors 102 which are capable of providing sensor data regarding the particular cell 201. In other words, the number or the sensor count 221 of sensors 102 may be determined, for which the particular cell 201 lies within the effective FoV 212 of the respective sensor 102.

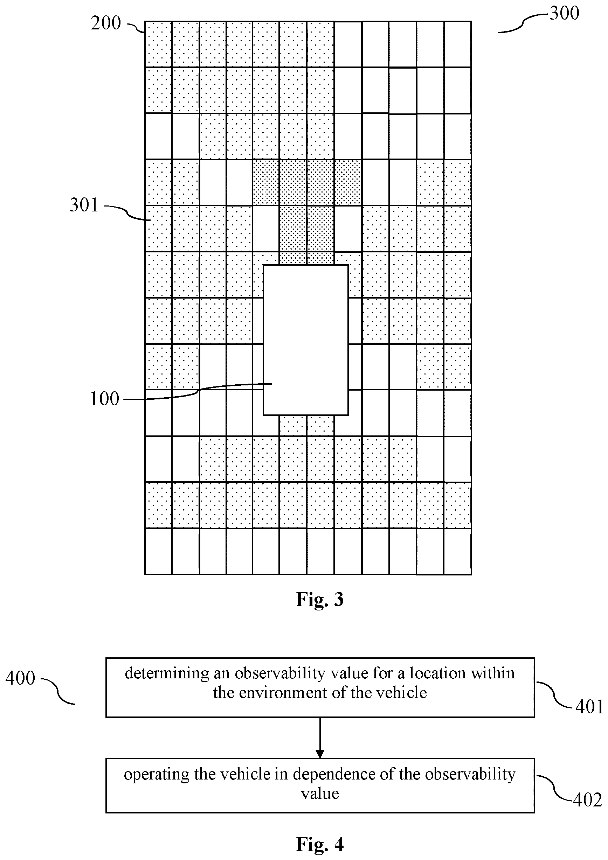

The grid 200 indicating the sensor count 221 for each of the grid cells 201 may be the basis for providing an observability grid 300 as shown in Fig. 3. The observability grid 300 may indicate an observability value 301 for each grid cell 201.

The goal of observability is to measure the likelihood that a relevant object 210 within the environment of the vehicle 100 may have been missed by one or more sensors 102 of the vehicle 100. In particular, the observability value 301 of a grid cell 201 may indicate the probability that no object 210 has been missed within the grid cell 201.

A sensor 102 may be configured to determine and to indicate its FoV 202. In particular, a sensor 102 may be configured to indicate,

- the ideal FoV. The ideal FoV may be the maximum area within which the sensor 102 is able to detect an object 210 under ideal conditions. The ideal FoV is typically static information and typically does not need to be communicated to the control unit 101 at run-time of the vehicle 100.

- the actual and/or current FoV 202. The actual FoV 202 may indicate the current area within which the sensor 102 is able to detect an object 210 (taking into account the current weather conditions and/or sensor conditions). Typically, other traffic participants 210 do not affect the information regarding the actual FoV 202 provided by the sensor 102. Obstruction by another traffic participant 210 may be taken into account in a subsequent step for determining the observability. Information regarding the actual FoV 202 may be communicated at run-time by the sensor 102 to the control unit 101. The sensor 102 may be provided with information regarding the current weather condition in order to enable the sensor 102 to determine the actual FoV 202.

The FoV 202 (ideal and/or actual) of a sensor 102 may be divided into regions or areas, e.g., areas close to the sensor 102 and areas far from the sensors 102, areas between -10 to 10 degree, etc. The number of areas and the subdivision of areas may be dependent on the type of sensor 102. A sensor 102 may provide a single area or more than 100 different areas. The control unit 101 may be configured to determine for each grid cell 201 whether the FoV 202 of a sensor 102 covers the respective grid cell 201 or not.

For each region or area of the FoV 202, the following information may be indicated:

- the probability for missing an object 210 under the assumption that there is an object 210 to be observed. This probability may be referred to as the probability of non-detection (Pnd);
- the probability for detecting an object 210 under the assumption that there is an object 210 to be observed. This probability may be referred to as the probability of detection (Pd); and/or
- the probability for detecting an object 210 under the assumption that there is no object 210 to be observed. This probability may be referred to as the probability of false alarm (Pfa).

This may be communicated at run-time. Each of the probability values may be defined for each area (e.g. for each grid cell 201) and/or for each recognition function.

Different sensors 102 may use different approaches for computing the above mentioned probability values. The delay with which a sensor 102 is able to detect a change in the current FoV 202 and/or a change in the probability of detection may be taken into account when determining an observability value 301.

The approach for determining observability may rely on information theory. The sensors 102 may be modelled as symbol generator. By way of example, it may be assumed that a sensor 102 may generate three symbols (but a generalization of the approach may be used, which allows for N symbols). Furthermore, the case of a single recognition function may be assumed. Observability may be computed based on the probability that a sensor 102 generates a certain symbol.

In an example, a sensor 102 is configured to generate three different symbols: detected, not-detected, and unknown. The information, which is provided at run-time by the different sensors 102 may be mapped into a probabilistic framework, e.g. using the following approach,

- for each region or cell 201, which lies outside of the actual FoV 202 of a sensor 102, the probability for generating the symbol "unknown" is 1. Other probability values may be set to 0;
- for each region or cell 201, which lies inside the actual FoV 202. the probability for generating the symbol "unknown" is 0. Other probability values may be set to the values communicated by the respective sensor 102.

Observability typically does not depend on whether the sensors 102 of the vehicle 100 have detected an object 210 or not. Due to the fact that observability relies on the probability values which are communicated by the different sensors 102 at run time, and not on the actual detections of the sensors 102, the observability may also be computed for hypothetical cases. This is beneficial for the above mentioned use case regarding the cleaning process for cleaning a sensor 102. When a sensor 192 is cleaned, its probability values can all set to 0, except for the probability of generating the symbol "unknown".

The environment model may be considered to be a symbol generator, wherein the probabilities for generating the symbols "detected", "not-detected", or "unknown", respectively, may depend on the specific values which are provided by the sensors 102 and which depend on the specific algorithm used for fusion. Given a certain algorithm for fusing sensor data, it is possible to compute, based on the probability values provided by the sensors 102, the probability that the environment model will generate a certain symbol for a particular cell 201, under the assumption that an object 210 is present in the particular cell 201.

Hence, observability values 301 may be determined based on the actual FoVs 202 of the sensors 102 and based on probability values provided by the sensors 102. The obstruction of a detected object 210 may be taken into account, by adjusting the probability for the symbol "unknown" to 1 for each area or grid cell 201 which is obstructed by a detected object 210.

A vehicle 100 may comprise S sensors 102, wherein the individual sensor 102 may be identified using the index $i = 1, ... , S$. The symbol which is generate by the sensor $i$ at the time instant $k$ and at the position or cell or location $P$ for a target or object 210 from a particular target class $j$ (with $j = 1, ... , T$) may be denoted as $s_i^j(k; P)$. Possible symbols may be D (for detected), ND (for not detected) and Unk (for unknown).

The symbols which are generated by the different sensors 102 $i = 1, ... , S$ at the time instant k and at the position or cell or location $P$ for a target or object 210 from a particular target class $j$ may be fused using a fusion function $\Gamma^j(k; P)$. The fusion function provides as output one of the possible symbols D, ND or Unk.

The output of the fusion function depends on the symbols $s_i^j(k; P)$ which are provided by the different sensors 102 $i = 1, ... , S$. Table 1 shows an example fusion function for S = 2 sensors 102.

| $s_1^1(k; P)$ | $s_2^1(k; P)$ | $\Gamma^1(k; P)$ |
|---|---|---|
| Unk | Unk | Unk |
| Unk | D | D |
| Unk | ND | ND |
| D | Unk | D |
| D | D | D |
| D | ND | D |
| ND | Unk | ND |
| ND | D | ND |
| ND | ND | ND |

Table 1

Furthermore, the variable $\theta^j(k; P)$ may be taken into account, which models the presence of a target of target class $j$ at position or cell or location $P$ at time instant $k$. If $\theta^j(k; P) = P$, then a target (or object) from target (or object) class $j$ is present at the position or cell $P$ at time instant $k$. If $\theta^j(k; P) = NP$, then no target from target class $j$ is present at the position or cell or location $P$ at time instant $k$.

The observability value 301 for a target of target class $j$ at the position or cell $P$ at time instant $k$ may be denoted as $O^j(k; P)$. An example metric for determining $O^j(k; P)$ is the sensor count 221, which indicates the number of sensors 102 that are configured to perform a detection of a target from target class $j$ at the position or cell $P$ at time instant $k$. In particular, the number of sensors 102, whose actual FoV 202 includes the position or cell $P$, may be counted, and used as the observability value 301 for the position or cell $P$.

A further observability measure may be determined based on the probability of no missed detection. This probability measures the probability that the fusion function declares an area as free, when instead it is not. The probability can be written as

$$O^j(k;P) = 1 - P\left[\Gamma^j(k;P) = \mathsf{ND}|\theta^j(k-1;P) = \mathsf{P}\right].$$

This metric assumes that the only unacceptable events are those that declare an area 201 as free when instead it is occupied. The declaration of an area 201 as occupied or unknown, when it is actually occupied, may be acceptable. If desired, it is possible to modify the metric so that only areas declared as free when they are not occupied are the acceptable event. In such a case, the observability metric may be modified as

$$O^j(k;P) = P\left[\Gamma^j(k;P) = \mathsf{D}|\theta^j(k-1;P) = \mathsf{P}\right].$$

The above mentioned probabilities may be determined using,

- the definition of the fusion function $\Gamma^j(k;P)$;
- the probability of detection (Pd) of a target from target class $j$ at the position $P$ at time instant $k$, for each of the sensors $i = 1, ..., S$;
- the probability of non-detection (Pnd) of a target from target class $j$ at the position $P$ at time instant $k$, for each of the sensors $i = 1, ..., S$; and/or
- the probability of false alarm (Pfa) of a target from target class j at the position $P$ at time instant $k$, for each of the sensors $i = 1, ..., S$.

An observability metric may be a function that maps the quality of recognition of a sensor 102 or of a sensor fusion function to a scalar value. The following constraints may be considered for selecting an observability metric

- observability does not consider past values, e.g., its value 301 depends only on the current quality of recognition;
- observability is a scalar value;
- observability for every point in space and for each recognition function;
- observability is minimal when no sensors 102 cover a certain area 201; and/or
- observability increases with the number of sensors 102 that cover a certain area 201.

Hence, observability values $O^j(k;P)$ 301 may be determined for one or more positions or cells $P$ 201 within the environment around a vehicle 100. The observability values $O^j(k;P)$ 301 may be determined for one or more different target or object types $j$ and for a plurality of subsequent time instants $k$. The observability values $O^j(k;P)$ 301 may take on values between 0 and 1. The value 0 may indicate that an object 210 of object type $j$ is not observable at the position or cell $P$ 201. By consequence, a detection or a non-detection of an object 210 by a sensor 102 may be ignored. On the other hand, the value 1 may indicate that an object 210 of object type $j$ is fully observable at the position or cell $P$ 201. By consequence, a detection or a non-detection of an object 210 by a sensor 102 may be considered to be a hard fact.
An observability value $O^j(k;P)$ 301 for a position or cell $P$ 201 may be determined based on

- data (notably detection or non-detection probability values) provided by the one or more sensors 102 which are capable of sensing the position or cell $P$ 201; and/or
- the number of sensors 102 which are capable of sensing the position or cell $P$ 201.

A particular position or cell $P$ 201 may typically be observed by the sensors 102 of a vehicle 100 at multiple time instants $k$ prior to reaching the particular position or cell $P$ 201 or prior to reaching a position or cell at a given distance from the particular position or cell $P$ 201. By way of example, the observability values $O^j(k;P)$ 301 for a particular position or cell $P$ 201 may be determined at a sampling rate $P$. The control unit 101 of the vehicle 100 may be configured to determine $K$ observability values $O^j(k;P)$ 301 for the particular position or cell $P$ 201 at the time instants $k = 1, ..., K$. Furthermore, the control unit 101 may be configured to determine a cumulated observability value

$$O^j(P) = 1 - \prod_{k=1}^{K}\left(1 - O^j(k;P)\right)$$

for the particular position or cell $P$ 201. A maneuver of the vehicle 100 may be planned such that the cumulated observability value $O^j(P)$ is equal to or higher than a pre-determined observability threshold. By doing this, the safety of driving maneuver may be increased.

By way of example, the control unit 101 of the vehicle 100 may be configured to set the speed of the vehicle 100 in dependence of the cumulated observability. By reducing the speed, the number $K$ of observations of a particular position or cell $P$ 201 may be increased, thereby increasing the cumulated observability $O^j$ (P).

Hence, if the instantaneous observability values $O^j$ ($k$; $P$) 301 are relatively low, reducing the vehicle speed may be used to increase the cumulated observability $O^j$ (P), thereby leading to a high level of safety, even in case of poor (instantaneous) observability.

Fig. 4 shows a flow chart of an example (computer-implemented) method 400 for operating a vehicle 100 which comprises a plurality of sensors 102 for capturing sensor data regarding an environment of the vehicle 100. The method 400 may be executed by a control unit 101 of the vehicle 100.

The method 400 comprises determining 401 an observability value 301 for a particular location (notably cell) 201 within the environment of the vehicle 100. The observability value 301 may be indicative of how well the particular location 201 can be sensed by the plurality of sensors 102 of the vehicle 100. In other words, the observability value 301 may be indicative of how well objects 210 can be observed within the particular location 201 using the sensor data captured by the plurality of sensors 102 of the vehicle 100.

The method 400 further comprises operating 402 the vehicle 100, notably the autonomous longitudinal and/or lateral guidance of the vehicle 100, in dependence of the observability value 301 for the particular location 201. By way of example, the degree of autonomy, notably the SAE-Level, of the vehicle 100 may be adapted in dependence of the observability value 301 for the particular location 201. By way of example, a relatively high degree of autonomy may be selected, if the observability value 301 indicates a relative high level of observability at the particular location 201. On the other hand, a relatively low degree of autonomy may be selected, if the observability value 301 indicates a relative low level of observability at the particular location 201.

Alternatively, or in addition, the driving speed of the vehicle 100 may be adapted in dependence of the observability value 301 for the particular location 201. By way of example, a relatively high driving speed may be selected, if the observability value 301 indicates a relative high level of observability at the particular location 201. On the other hand, a relatively low driving speed may be selected, if the observability value 301 indicates a relative low level of observability at the particular location 201.

The determination of observability provides an abstraction layer between sensors 102 and the control unit 101 which is configured to take decisions about upcoming maneuvers. This allows independent development of the control unit 101 from specific sensor technologies. When a sensor 102 is changed, no change is required to be implemented within the control unit 101. Cleaning management can be performed in a reliable manner based on observability. Appropriate autonomous driving levels may be determined based on the current observability of the environment of the vehicle 100. For example, if a lidar sensor stops working as expected, the control unit 101 may decide which autonomous level and which maneuvers are most appropriate for the current observability value. In a further example, the maximum safe speed of a vehicle 100 may be determined based on the current observability.

**Claims**

1. A control unit (101) for operating a vehicle (100) which comprises a plurality of sensors (102) for capturing sensor data regarding an environment of the vehicle (100), wherein the control unit (101) is configured to

   - determine an observability value (301) for a particular location (201) within the environment of the vehicle (100); wherein the observability value (301) is indicative of how well the particular location (201) can be sensed by the plurality of sensors (102) of the vehicle (100);
   - determine a sequence of such observability values (301) for the particular location (201) for a sequence of subsequent time instants k;
   - determine a cumulated observability for the particular location (201) over a time period of $K$ subsequent time instants $k$, with $K > 1$, based on observability values (301) from the sequence of observability values (301) for the particular location (201) for $K$ subsequent time instants $k$, notably by combining the observability values (301) for the particular location (201) for $K$ subsequent time instants $k$; and
   - operate the vehicle (100), notably autonomous longitudinal and/or lateral guidance of the vehicle (100), based on the sequence of observability values (301) for the particular location (201) for the sequence of subsequent time instants k, namely by operating the vehicle (100) in dependence on the cumulated observability, such that the cumulated observability is equal to or greater than a pre-determined observability threshold.

2. The control unit (101) of claim 1, wherein the control unit (101) is configured to

- determine a subset of sensors (102) from the plurality of sensors (101), which is capable of capturing sensor data regarding the particular location (201); and
- determine the observability value (301) for the particular location (201) based on the subset of sensors (102), notably based on a number of sensors (102) comprised within the subset of sensors (102).

3. The control unit (101) of claim 2, wherein the control unit (101) is configured to

- determine one or more probability values for each sensor (102) from the subset of sensors (102); wherein the one or more probability values for a sensor (102) are indicative of

- the probability that the sensor (102) does not detect an object (210) at the particular location (201), even though there is an object (210) at the particular location (201);
- the probability that the sensor (102) detects an object (210) at the particular location (201), when there is an object (210) at the particular location (201); and/or
- the probability that the sensor (102) detects an object (210) at the particular location (201), even though there is no object (210) at the particular location (201); and

- determine the observability value (301) for the particular location (201) based on the one or more probability values for each sensor (102) from the subset of sensors (102), notably by combining the one or more probability values for each sensor (102) from the subset of sensors (102).

4. The control unit (101) of any previous claim, wherein the control unit (101) is configured to determine the cumulated observability $O^j(P)$ for the particular location $P$ (201) based on

$$O^j(P) = 1 - \prod_{k=1}^{K} \left(1 - O^j(k; P)\right)$$

wherein $O^j(k; P)$ is the observability value (301) for the particular location $P$ (201) for the time instant $k$.

5. The control unit (101) of any previous claim, wherein the control unit (101) is configured to

- determine a plurality of observability values (301) for the particular location (201) for a corresponding plurality of different object types of objects (210) to be sensed at the particular location (201); and
- operate the vehicle (100) in dependence on the plurality of observability values (301) for the plurality of different object types.

6. The control unit (101) of any previous claim, wherein the control unit (101) is configured to

- determine an observability grid (300) which comprises a plurality of observability values (301) for a corresponding plurality of different locations (201) within the environment of the vehicle (100); and
- operate the vehicle (100) in dependence on the observability grid (300).

7. A motor vehicle (100) comprising the control unit (101) and the plurality of sensors (102) of any previous claim, wherein

- the plurality of sensors (102) comprises one or more cameras, one or more radar sensors, one or more lidar sensors and/or one or more ultrasonic sensors; and/or
- a sensor (102) is configured to indicate for the particular location (201) whether

- an object (210) has been detected based on the sensor data of the sensor (102);
- no object (210) has been detected based on the sensor data of the sensor (102); and/or
- it is unknown if an object (210) is located at the particular location (201).

8. A method (400) for operating a vehicle (100) which comprises a plurality of sensors (102) for capturing sensor data regarding an environment of the vehicle (100), wherein the method (400) comprises

- determining (401) an observability value (301) for a particular location (201) within the environment of the vehicle (100); wherein the observability value (301) is indicative of how well the particular location (201) can be sensed by the plurality of sensors (102) of the vehicle (100);
- determining a sequence of such observability values (301) for the particular location (201) for a sequence of subsequent time instants $k$;
- determining a cumulated observability for the particular location (201) over a time period of $K$ subsequent time instants $k$, with $K > 1$, based on observability values (301) from the sequence of observability values (301) for the particular location (201) for $K$ subsequent time instants $k$, notably by combining the observability values (301) for the particular location (201) for $K$ subsequent time instants $k$; and
- operating (402) the vehicle (100), notably autonomous longitudinal and/or lateral guidance of the vehicle (100), based on the sequence of observability values (301) for the particular location (201) for the sequence of subsequent time instants $k$, namely by operating the vehicle (100) in dependence on the cumulated observability, such that the cumulated observability is equal to or greater than a pre-determined observability threshold.

**Patentansprüche**

1. Steuereinheit (101) zum Betreiben eines Fahrzeugs (100), das mehrere Sensoren (102) für das Erfassen von Sensordaten bezüglich einer Umgebung des Fahrzeugs (100) umfasst, wobei die Steuereinheit (101) für Folgendes konfiguriert ist:

   - Bestimmen eines Beobachtbarkeitswertes (301) für eine bestimmte Stelle (201) in der Umgebung des Fahrzeugs (100), wobei der Beobachtbarkeitswert (301) angibt, wie gut die bestimmte Stelle (201) von den mehreren Sensoren (102) des Fahrzeugs (100) wahrgenommen werden kann,
   - Bestimmen einer Folge derartiger Beobachtbarkeitswerte (301) für die bestimmte Stelle (201) für eine Folge fortlaufender Zeitpunkte k,
   - Bestimmen einer kumulierten Beobachtbarkeit für die bestimmte Stelle (201) über eine Zeitspanne aus K fortlaufenden Zeitpunkten k, wobei K > 1, basierend auf Beobachtbarkeitswerten (301) aus der Folge der Beobachtbarkeitswerte (301) für die bestimmte Stelle (201) für K fortlaufende Zeitpunkte k, insbesondere durch Kombinieren der Beobachtbarkeitswerte (301) für die bestimmte Stelle (201) für K fortlaufende Zeitpunkte k, und
   - Betreiben des Fahrzeugs (100), insbesondere autonome Längs- und/oder Querführung des Fahrzeugs (100), basierend auf der Folge der Beobachtbarkeitswerte (301) für die bestimmte Stelle (201) für die Folge fortlaufender Zeitpunkte k, und zwar durch Betreiben des Fahrzeugs (100) in Abhängigkeit von der kumulierten Beobachtbarkeit derart, dass die kumulierte Beobachtbarkeit gleich oder größer als ein festgelegter Beobachtbarkeitsschwellwert ist.

2. Steuereinheit (101) nach Anspruch 1, wobei die Steuereinheit (101) für Folgendes konfiguriert ist:

   - Bestimmen einer Teilmenge von Sensoren (102) aus den mehreren Sensoren (101), die in der Lage sind, Sensordaten bezüglich der bestimmten Stelle (201) zu erfassen, und
   - Bestimmen des Beobachtbarkeitswertes (301) für die bestimmte Stelle (201) basierend auf der Teilmenge von Sensoren (102), insbesondere basierend auf einer Anzahl von Sensoren (102), die in der Teilmenge von Sensoren (102) enthalten ist.

3. Steuereinheit (101) nach Anspruch 2, wobei die Steuereinheit (101) für Folgendes konfiguriert ist:

   - Bestimmen eines oder mehrerer Wahrscheinlichkeitswerte für jeden Sensor (102) aus der Teilmenge von Sensoren (102), wobei der eine oder die mehreren Wahrscheinlichkeitswerte für einen Sensor (102) Folgendes angeben:

     - die Wahrscheinlichkeit, dass der Sensor (102) an der bestimmten Stelle (201) kein Objekt (210) erkennt, auch wenn sich an der bestimmten Stelle (201) ein Objekt (210) befindet,
     - die Wahrscheinlichkeit, dass der Sensor (102) an der bestimmten Stelle (201) ein Objekt (210) erkennt, wenn sich an der bestimmten Stelle (201) ein Objekt (210) befindet, und/oder
     - die Wahrscheinlichkeit, dass der Sensor (102) an der bestimmten Stelle (201) ein Objekt (210) erkennt, auch wenn sich an der bestimmten Stelle (201) kein Objekt (210) befindet, und
   - Bestimmen des Beobachtbarkeitswertes (301) für die bestimmte Stelle (201) basierend auf dem einem oder den mehreren Wahrscheinlichkeitswerten für jeden Sensor (102) der Teilmenge von Sensoren (102), insbesondere durch Kombinieren des einen oder der mehreren Wahrscheinlichkeitswerte für jeden Sensor (102) aus der Teilmenge von Sensoren (102).

**4.** Steuereinheit (101) nach einem vorhergehenden Anspruch, wobei die Steuereinheit (101) dafür konfiguriert ist, die kumulierte Beobachtbarkeit $O^j$ (P) für die bestimmte Stelle P (201) basierend auf

$$O^j\left(P\right) = 1 - \prod_{k=1}^{K} \left(1 - O^j\left(k;P\right)\right)$$

zu bestimmen, wobei $O^j$ (k; P) der Beobachtbarkeitswert (301) für die bestimmte Stelle P (201) für den Zeitpunkt k ist.

**5.** Steuereinheit (101) nach einem vorhergehenden Anspruch, wobei die Steuereinheit (101) für Folgendes konfiguriert ist:

- Bestimmen mehrerer Beobachtbarkeitswerte (301) für die bestimmte Stelle (201) für entsprechende mehrere verschiedene Objektarten von Objekten (210), die an der bestimmten Stelle (201) wahrgenommen werden sollen, und
- Betreiben des Fahrzeugs (100) in Abhängigkeit von den mehreren Beobachtbarkeitswerten (301) für die mehreren verschiedenen Objektarten.

**6.** Steuereinheit (101) nach einem vorhergehenden Anspruch, wobei die Steuereinheit (101) für Folgendes konfiguriert ist:

- Bestimmen eines Beobachtbarkeitsrasters (300), das mehrere Beobachtbarkeitswerte (301) für entsprechende mehrere verschiedene Stellen (201) in der Umgebung des Fahrzeugs (100) umfasst, und
- Betreiben des Fahrzeugs (100) in Abhängigkeit von dem Beobachtbarkeitsraster (300).

**7.** Kraftfahrzeug (100), die Steuereinheit (101) und die mehreren Sensoren (102) nach einem vorhergehenden Anspruch umfassend, wobei:

- die mehreren Sensoren (102) eine oder mehrere Kameras, einen oder mehrere Radarsensoren, einen oder mehrere Lidarsensoren und/oder einen oder mehrere Ultraschallsensoren umfassen und/oder
- ein Sensor (102) dafür konfiguriert ist, für die bestimmte Stelle (201) anzugeben, ob:
- basierend auf den Sensordaten des Sensors (102) ein Objekt (210) erkannt wurde,
- basierend auf den Sensordaten des Sensors (102) kein Objekt (210) erkannt wurde und/oder
- unbekannt ist, ob sich an der bestimmten Stelle (201) ein Objekt (210) befindet.

**8.** Verfahren (400) zum Betreiben eines Fahrzeugs (100), das mehrere Sensoren (102) für das Erfassen von Sensordaten bezüglich einer Umgebung des Fahrzeugs (100) umfasst, wobei das Verfahren (400) Folgendes umfasst:

- Bestimmen (401) eines Beobachtbarkeitswertes (301) für eine bestimmte Stelle (201) in der Umgebung des Fahrzeugs (100), wobei der Beobachtbarkeitswert (301) angibt, wie gut die bestimmte Stelle (201) von den mehreren Sensoren (102) des Fahrzeugs (100) wahrgenommen werden kann,
- Bestimmen einer Folge derartiger Beobachtbarkeitswerte (301) für die bestimmte Stelle (201) für eine Folge fortlaufender Zeitpunkte k,
- Bestimmen einer kumulierten Beobachtbarkeit für die bestimmte Stelle (201) über eine Zeitspanne aus K fortlaufenden Zeitpunkten k, wobei K > 1, basierend auf Beobachtbarkeitswerten (301) aus der Folge der Beobachtbarkeitswerte (301) für die bestimmte Stelle (201) für K fortlaufende Zeitpunkte k, insbesondere durch Kombinieren der Beobachtbarkeitswerte (301) für die bestimmte Stelle (201) für K fortlaufende Zeitpunkte k, und
- Betreiben (402) des Fahrzeugs (100), insbesondere autonome Längs- und/oder Querführung des Fahrzeugs (100), basierend auf der Folge der Beobachtbarkeitswerte (301) für die bestimmte Stelle (201) für die Folge fortlaufender Zeitpunkte k, und zwar durch Betreiben des Fahrzeugs (100) in Abhängigkeit von der kumulierten Beobachtbarkeit derart, dass die kumulierte Beobachtbarkeit gleich oder größer als ein festgelegter Beobachtbarkeitsschwellwert ist.

**Revendications**

1. Unité (101) de commande pour faire fonctionner un véhicule (100) qui comporte une pluralité de capteurs (102) servant à capturer des données de capteurs concernant un environnement du véhicule (100), l'unité (101) de commande étant configurée pour

   - déterminer une valeur (301) d'observabilité pour un emplacement particulier (201) au sein de l'environnement du véhicule (100); la valeur (301) d'observabilité étant indicative du degré d'adéquation avec lequel l'emplacement particulier (201) peut être détecté par la pluralité de capteurs (102) du véhicule (100) ;
   - déterminer une suite desdites valeurs (301) d'observabilité pour l'emplacement particulier (201) pour une suite d'instants temporels subséquents *k* ;
   - déterminer une observabilité cumulée pour l'emplacement particulier (201) sur une période de *K* instants temporels subséquents *k,* avec *K* >1, d'après des valeurs (301) d'observabilité issues de la suite de valeurs (301) d'observabilité pour l'emplacement particulier (201) pour *K* instants temporels subséquents k, notamment en combinant les valeurs (301) d'observabilité pour l'emplacement particulier (201) pour *K* instants temporels subséquents *k* ; et
   - faire fonctionner le véhicule (100), notamment par guidage longitudinal et/ou latéral autonome du véhicule (100), d'après la suite de valeurs (301) d'observabilité pour l'emplacement particulier (201) pour la suite d'instants temporels subséquents *k,* à savoir en faisant fonctionner le véhicule (100) en fonction de l'observabilité cumulée, de telle façon que l'observabilité cumulée soit supérieure ou égale à un seuil d'observabilité prédéterminé.

2. Unité (101) de commande selon la revendication 1, l'unité (101) de commande étant configurée pour

   - déterminer un sous-ensemble de capteurs (102) issu de la pluralité de capteurs (101), qui est capable de capturer des données de capteurs concernant l'emplacement particulier (201) ; et
   - déterminer la valeur (301) d'observabilité pour l'emplacement particulier (201) d'après le sous-ensemble de capteurs (102), notamment d'après un nombre de capteurs (102) compris dans le sous-ensemble de capteurs (102) .

3. Unité (101) de commande selon la revendication 2, l'unité (101) de commande étant configurée pour

   - déterminer une ou plusieurs valeurs de probabilité pour chaque capteur (102) du sous-ensemble de capteurs (102); la ou les valeurs de probabilité pour un capteur (102) étant indicatives de
   - la probabilité que le capteur (102) ne détecte pas un objet (210) à l'emplacement particulier (201), bien qu'un objet (210) soit présent à l'emplacement particulier (201) ;
   - la probabilité que le capteur (102) détecte un objet (210) à l'emplacement particulier (201), lorsqu'un objet (210) est présent à l'emplacement particulier (201) ; et/ou
   - la probabilité que le capteur (102) détecte un objet (210) à l'emplacement particulier (201), bien qu'aucun objet (210) ne soit présent à l'emplacement particulier (201) ; et
   - déterminer la valeur (301) d'observabilité pour l'emplacement particulier (201) d'après la ou les valeurs de probabilité pour chaque capteur (102) du sous-ensemble de capteurs (102), notamment en combinant la ou les valeurs de probabilité pour chaque capteur (102) du sous-ensemble de capteurs (102).

4. Unité (101) de commande selon l'une quelconque des revendications précédentes, l'unité (101) de commande étant configuré pour déterminer l'observabilité cumulée $O^j$ (P) pour l'emplacement particulier P (201) d'après

$$O^j(P) = 1 - \prod_{k=1}^{K}\left(1 - O^j(k;P)\right)$$

$O^j$ (*k*; *P*) étant la valeur (301) d'observabilité pour l'emplacement particulier P (201) pour l'instant temporel *k.*

5. Unité (101) de commande selon l'une quelconque des revendications précédentes, l'unité (101) de commande étant configurée pour

   - déterminer une pluralité de valeurs (301) d'observabilité pour l'emplacement particulier (201) pour une pluralité correspondante de types d'objets différents d'objets (210) à détecter à l'emplacement particulier (201) ; et

- faire fonctionner le véhicule (100) en fonction de la pluralité de valeurs (301) d'observabilité pour la pluralité de types d'objets différents.

**6.** Unité (101) de commande selon l'une quelconque des revendications précédentes, l'unité (101) de commande étant configurée pour

- déterminer un maillage (300) d'observabilité qui comporte une pluralité de valeurs (301) d'observabilité pour une pluralité correspondante d'emplacements différents (201) au sein de l'environnement du véhicule (100) ; et
- faire fonctionner le véhicule (100) en fonction du maillage (300) d'observabilité.

**7.** Véhicule (100) à moteur comportant l'unité (101) de commande et la pluralité de capteurs (102) selon l'une quelconque des revendications précédentes,

- la pluralité de capteurs (102) comportant une ou plusieurs caméras, un ou plusieurs capteurs radar, un ou plusieurs capteurs lidar et/ou un ou plusieurs capteurs à ultrasons ; et/ou
- un capteur (102) étant configuré pour indiquer, pour l'emplacement particulier (201), si
- un objet (210) a été détecté d'après les données de capteurs du capteur (102) ;
- aucun objet (210) n'a été détecté d'après les données de capteurs du capteur (102) ; et/ou
- on ne sait pas si un objet (210) est situé à l'emplacement particulier (201).

**8.** Procédé (400) pour faire fonctionner un véhicule (100) qui comporte une pluralité de capteurs (102) servant à capturer des données de capteurs concernant un environnement du véhicule (100), le procédé (400) comportant les étapes consistant à

- déterminer (401) une valeur (301) d'observabilité pour un emplacement particulier (201) au sein de l'environnement du véhicule (100); la valeur (301) d'observabilité étant indicative du degré d'adéquation avec lequel l'emplacement particulier (201) peut être détecté par la pluralité de capteurs (102) du véhicule (100) ;
- déterminer une suite desdites valeurs (301) d'observabilité pour l'emplacement particulier (201) pour une suite d'instants temporels subséquents $k$ ;
- déterminer une observabilité cumulée pour l'emplacement particulier (201) sur une période de K instants temporels subséquents $k,$ avec $K > 1$, d'après des valeurs (301) d'observabilité issues de la suite de valeurs (301) d'observabilité pour l'emplacement particulier (201) pour $K$ instants temporels subséquents k, notamment en combinant les valeurs (301) d'observabilité pour l'emplacement particulier (201) pour K instants temporels subséquents $k$ ; et
- faire fonctionner (402) le véhicule (100), notamment par guidage longitudinal et/ou latéral autonome du véhicule (100), d'après la suite de valeurs (301) d'observabilité pour l'emplacement particulier (201) pour la suite d'instants temporels subséquents $k,$ à savoir en faisant fonctionner le véhicule (100) en fonction de l'observabilité cumulée, de telle façon que l'observabilité cumulée soit supérieure ou égale à un seuil d'observabilité prédéterminé.

Fig. 1

Fig. 2a

Fig. 2b

**Fig. 2c**

**Fig. 3**

determining an observability value for a location within the environment of the vehicle

operating the vehicle in dependence of the observability value

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017216567 A1
- US 2018246520 A1
- US 2016266581 A1
- US 10290116 B2

**Non-patent literature cited in the description**

- Object Existence Probability Fusion using Dempster-Shafer Theory in a High-Level Sensor Data Fu-sion Architecture. **MICHAEL AEBERHARD et al.** IN-TELLIGENT VEHICLES SYMPOSIUM (IV), 2011 IEEE. IEEE, 05 June 2011, 770-775